# EUROPEAN PATENT APPLICATION

(11) **EP 1 772 427 A1**
(43) Date of publication of application: **11.04.2007**
(21) Application number: 04745524.1
(22) Date of filing: 02.06.2004
(51) Int. Cl.: C01B 3/38, H01M 8/06, C04B 35/80, C04B 38/00, C04B 38/02

(54) **FUEL TREATING DEVICE**

(71) Applicant: EBARA BALLARD CORPORATION, Tokyo 144-0042 (JP)
(72) Inventor: INAGAKI, Shin, Ohta-ku Tokyo 1440042 (JP); SUZUKI, Takashi, Ohta-ku Tokyo 1440042 (JP); MURAYAMA, Kunihiko, Ohta-ku Tokyo 1440042 (JP)
(74) Representative: HOFFMANN EITLE
(86) International application number: PCT/JP2004/007625
(87) International publication number: WO 2005/118467

(57) **Abstract**

To provide a fuel processor provided with a heat insulating shaped body which has high heat resistance and heat insulating properties, which is good in formability, which is strong against external impacts, and which can be easily fixed to the fuel processor 1 or can be filled into a narrow space or the like in the fuel processor without forming any gap. A fuel processor 1 for reforming a raw material gas G into a fuel gas J mainly composed of hydrogen, having a combustion chamber 13 for generating heat for the reforming, a solid first primary heat insulating material 17 for thermally insulating the combustion chamber 13 from an outside, and a fabric-like secondary heat insulating material 19 covering the outside of the first primary heat insulating material 17 for heat insulation.

## Description

### Technical Field

The present invention relates to a fuel processor which processes a raw material gas to obtain a fuel gas to be supplied to a fuel cell and, more particularly, to a fuel processor provided with a heat insulating shaped body which thermally insulates a combustion section to retain the temperature thereof or thermally isolates a combustion section.

### Background Art

In a fuel processor for producing hydrogen for a solid polymer electrolyte fuel cell from a fossil fuel such as natural gas or kerosene, it is required to maintain and stabilize the combustion section, catalyst layer, heat exchanging section and so on of the processor at a high temperature of 100°C to 800°C or higher in order to improve the raw material processing efficiency and to maintain the temperature balance in the processor properly. To satisfy the requirements, it is necessary to attach, insert or cover a heat insulating shaped body having incombustibility, heat resistance and heat-insulating properties to the combustion section, catalyst layer, heat exchanging section and so on of the fuel processor in conformity with their shape and structure. An example to satisfy the requirements is a fuel processor having a heat insulating shaped body for heat insulation and temperature retention, which is formed by compression molding of silica superfine powder such as silica fumes and is attached to and covering it.

### Disclosure of Invention

### Problem to be Solved by the Invention

However, though such a heat insulating shaped body has satisfactory heat resistance and heat insulating properties, it is expensive. Also, since it is formed by a method such as compression molding, it does not have sufficient formability and is difficult to form into a desired shape. In addition, since the heat insulating shaped body has low surface hardness and strength, it is weak against external impacts. Thus it may not be satisfactory in terms of practicality. Also, such a solid heat insulating material is difficult to fix and is conventionally fixed with a tape or the like. In this configuration, a phenomenon occurs in which a gap is formed between the solid heat insulating materials or between the container and the fixed heat insulating material because of their thermal expansion, and heat escapes to the outside. Moreover, when the solid heat insulating material is filled into a narrow space or the like, a gap may be formed between the heat insulating material and the processor to cause deterioration of the heat insulating performance.

The present invention has been made in view of the above technological problems and it is, therefore, an object of the present invention to provide a fuel processor provided with a heat insulating shaped body which has high heat resistance and heat insulating properties, which is good in formability, which is strong against external impacts, and which can be easily fixed to the fuel processor or can be filled into a narrow space or the like in the fuel processor without forming any gap.

### Means for Solving the Problem

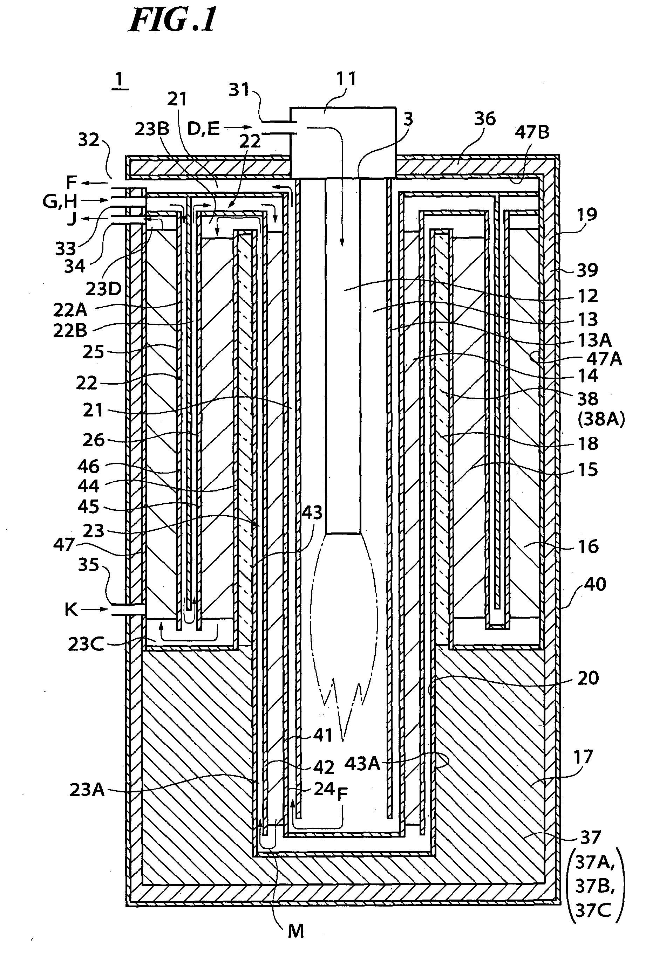

In order to achieve the aforementioned object, a fuel processor according to the present invention as a fuel processor 1 for reforming a raw material gas G into a fuel gas J mainly composed of hydrogen, has, as shown in FIG. 1 for example, a combustion chamber 13 for generating heat for the reforming;a solid first primary heat insulating material 17 for thermally insulating the combustion chamber 13 from an outside; and a fabric-like secondary heat insulating material 19 covering an outside of the first primary heat insulating material 17 for heat insulation.

In this configuration, since the fuel processor 1 has the combustion chamber 13, the first primary heat insulating material 17 and the secondary heat insulating material 19, the first primary heat insulating material 17 and the secondary heat insulating material 19 are combined such that the solid first primary heat insulating material 17 having high heat insulating properties prevents the combustion heat from leaking from the combustion chamber 13 to the outside of the processor to maintain the combustion temperature in the combustion chamber 13 at an appropriate value, and the fabric-like secondary heat insulating material 19 covers and thermally insulates the outside of the solid first primary heat insulating material 17 to reinforce the heat insulating performance of the first primary heat insulating material 17 and can protect the first primary heat insulating material 17 from external impacts. That the secondary heat insulating material 19 covers the outside of the first primary heat insulating material 17 includes not only the case in which the secondary heat insulating material 19 directly covers the outside of the first primary heat insulating material 17 but also the case in which there is an intermediate member interposed between the secondary heat insulating material 19 and the first primary heat insulating material 17 and the secondary heat insulating material 19 covers the outside of the intermediate member.

In the fuel processor 1 according to the present invention as recited above, as shown in FIG. 1 for example, an inorganic foamed body 37A prepared by foaming and curing a mixture containing a silica-alumina-based fine powder may be used as the first primary heat insulating material 17, and a secondary heat insulating shaped body 39 prepared from an inorganic fiber may be used as the secondary heat insulating material 19.

In this configuration, since the inorganic foamed body 37A and the secondary heat insulating shaped body 39 are used in the fuel processor 1, the inorganic foamed body 37A and the secondary heat insulating shaped body 39 are combined such that the inorganic foamed body 37A having excellent heat resistance and good heat insulating properties at high temperatures and being able to be formed as a unitary body prevents the combustion heat from leaking from the combustion chamber 13 to the outside of the processor to maintain the combustion temperature in the combustion chamber 13 at an appropriate value, and the secondary heat insulating shaped body 39 having good installability and strength thermally insulates the outside of the inorganic foamed body 37A of insufficient strength to reinforce the heat insulating performance of the inorganic foamed body 37A and to protect the inorganic foamed body 37A from external impacts.

In the fuel processor 1 according to the present invention as recited above, as shown in FIG. 1 for example, an inorganic porous body 37B prepared by compression molding of a mixture containing a silica-based fine powder may be used as the first primary heat insulating material 17, and a secondary heat insulating shaped body 39 prepared from an inorganic fiber may be used as the secondary heat insulating material 19.

In this configuration, since the inorganic porous body 37B and the secondary heat insulating shaped body 39 are used in the fuel processor 1, the inorganic porous body 37B and the secondary heat insulating shaped body 39 are combined such that the inorganic porous body 37B having excellent heat resistance and good heat insulating properties at high temperatures prevents the combustion heat from leaking from the combustion chamber 13 to the outside of the processor to maintain the combustion temperature in the combustion chamber 13 at an appropriate value, and the secondary heat insulating material 19 having good installability and strength thermally insulates the outside of the inorganic porous body 37B, which is brittle and difficult to fix, to make the inorganic porous body 37B strong against external impacts and can fix the inorganic porous body 37B to the fuel processor 1 reliably.

In order to achieve the aforementioned object, another fuel processor 1 according to the present invention as a fuel processor 1 for reforming a raw material gas G into a fuel gas J mainly composed of hydrogen has, as shown in FIG. 1 for example, a combustion chamber 13 for generating heat for the reforming; a solid first primary heat insulating material 17 for thermally insulating the combustion chamber 13 from an outside; and a fabric-like second primary heat insulating material 18 for thermally insulating the combustion chamber 13 from a second section in the fuel processor 1.

In this configuration, since the fuel processor 1 has the combustion chamber 13, the first primary heat insulating material 17, and the second primary heat insulating material 18, the first primary heat insulating material 17 and the second primary heat insulating material 18 are combined such that the first primary heat insulating material 17 prevents the combustion heat from leaking from the combustion chamber 13 to the outside of the processor to maintain the combustion temperature in the combustion chamber 13 at an appropriate value, and the second primary heat insulating material 18 thermally insulates the combustion chamber 13 from a second section in the fuel processor 1 to maintain the combustion temperature in the combustion chamber 13 at an appropriate value and to maintain the temperature of the second section at a low temperature suitable therefor. The solid first primary heat insulating material 17 having high heat insulating performance and heat resistance performance is provided to thermally insulate the combustion chamber 13 from the outside and the second primary heat insulating material 18 with flexibility is inserted into a space formed between the combustion chamber 13 and the second section to thermally insulate the combustion chamber 13 from the second section, that is, the first primary heat insulating material 17 and the second primary heat insulating material 18 are used appropriately depending on the purposes to achieve efficient heat insulation. The second section in the fuel processor 1 means the section which is required to have a temperature lower than that in the combustion chamber 13 in the fuel processor 1.

In order to achieve the aforementioned object, another fuel processor 1 according to the present invention as a fuel processor 1 for reforming a raw material gas G into a fuel gas J mainly composed of hydrogen has, as shown in FIG. 1 for example, a combustion chamber 13 for generating heat for the reforming; and a solid first primary heat insulating material 17 for thermally insulating the combustion chamber 13 from an outside;
wherein an inorganic foamed body 37A prepared by foaming and curing a mixture containing a silica-alumina-based fine powder is used as the first primary heat insulating material 17.

In this configuration, since the fuel processor 1 has the combustion chamber 13 and the first primary heat insulating material 17 and since the inorganic foamed body 37A is used as the first primary heat insulating material 17, the inorganic foamed body 37A having excellent heat resistance and good heat insulating properties at high temperatures and being able to be formed as a unitary body can prevent the combustion heat from leaking from the combustion chamber 13 to the outside of the processor to maintain the combustion temperature in the combustion chamber 13 at an appropriate value.

In order to achieve the aforementioned object, another fuel processor 1 according to the present invention as a fuel processor for processing to reform a raw material gas G into a fuel gas J mainly composed of hydrogen, as shown in FIG. 1 for example, has a combustion chamber 13 for generating heat for the reforming; and a fabric-like second primary heat insulating material 18 for thermally insulating the combustion chamber 13 from a second section in the fuel processor 1,
wherein an inorganic staple fiber felt 38A prepared by forming a mixture containing an inorganic staple fiber and a heated expansion material into a felt-like state is used as the second primary heat insulating material 18.

In this configuration, since the fuel processor 1 has the combustion chamber 13 and the second primary heat insulating material 18 and since the inorganic staple fiber felt 38A having excellent heat resistance and good heat insulating properties at high temperatures is used as the second primary heat insulating material 18, the combustion chamber 13 can be thermally insulated from the second section in the fuel processor 1 to maintain the combustion temperature in the combustion chamber 13 at an appropriate value and to maintain the temperature of the second section at a low temperature suitable therefor. Since the inorganic staple fiber felt 38A, which has flexibility, is excellent in formability, and turns into powder and foams and expands under a high temperature condition, is inserted into a space formed between the combustion chamber 13 and the second section for the heat insulation between the combustion chamber 13 and the second section, efficient heat insulation can be achieved.

### Effect of the Invention

As described above, according to the present invention, the fuel processor has the combustion chamber, the first primary heat insulating material, and the secondary heat insulating material. Therefore, the solid first primary heat insulating material having high heat insulating properties can reduce the leakage of the combustion heat from the combustion chamber to the outside of the processor to maintain the combustion temperature in the combustion chamber at an appropriate value, and the fabric-like secondary heat insulating material covering the outside of the solid first primary heat insulating material for heat insulation can reinforce the heat insulating performance of the first primary heat insulating material and protect the first primary heat insulating material from external impacts.

### Best Mode for Carrying Out the Invention

Description is hereinafter made of an embodiment of the present invention with reference to the drawing.
FIG. 1 is a cross-sectional view illustrating the general configuration of a fuel reformer 1 as a fuel processor according to the embodiment of the present invention. As shown in the drawing, the fuel reformer 1 having a generally circular columnar shape is installed in an upright position and has a combustion material introducing section 11; a burner 12 (the combustion flame is shown by dot-and-dash lines); a combustion chamber 13; a reforming catalyst layer 14; a shift catalyst layer 15, a selective oxidation catalyst layer 16; a first primary heat insulating section 17; a second primary heat insulating section 18; a secondary heat insulating section 19; a partition 41; a partition 42; a partition 43; a partition 44; a partition 45; a partition 46; and a partition 47. These elements except the combustion material introducing section 11 and the secondary heat insulating section 19, are housed in the secondary heat insulating section 19 having a circular cylindrical shape.

The combustion material introducing section 11 is located at the center of an upper part of the fuel reformer 1, and has a raw material introduction port 31. Combustion materials (combustion gas D and combustion air E) are introduced through the raw material introduction port 31. The burner 12, which is connected to an opening 3 formed at the center of an upper part of the fuel reformer 1 and immediately below the combustion material introducing section 11 and suspended along the central axis of the fuel reformer 1, burns the combustion gas D. The combustion chamber 13 has a circular cylindrical combustion cylinder 13A as a peripheral wall surrounding it and houses the burner 12. In the combustion chamber 13, the combustion gas D is burned by the burner 12 to generate heat for use in reforming raw material gas G. The reforming catalyst layer 14 has an annular shape and is located outside the combustion cylinder 13A (radially outside of the fuel reformer 1). The reforming catalyst layer 14 is housed between the partition 41 and the partition 42 with its inside and outside in direct contact with the partition 41 and the partition 42, respectively.

The first primary heat insulating section 17 is a solid first primary heat insulating shaped body 37 prepared by forming a first primary heat insulating material. Since the first primary heat insulating shaped body 37 is solid, it is brittle but has high heat insulating and heat resistance performances. Since the first primary heat insulating shaped body 37 is solid, it does not have sufficient formability and thus is not suitable to fill a narrow space to be filled. Therefore, the first primary heat insulating shaped body 37 is filled in a large space to be filled in a lower part of the fuel reformer 1 as shown in the drawing. The first primary heat insulating shaped body 37 is classified, based on the composition of the first primary heat insulating material as described later, into (1) an inorganic foamed body 37A, (2) an inorganic porous body 37B or (3) an inorganic combined body 37C in which the first heat insulating material for the inorganic foamed body 37A and the first heat insulating material for the inorganic porous body 37B are combined like blocks.

The first primary heat insulating section 17 has a circular columnar shape with a circular columnar recess 20 at an upper part thereof, and is disposed in a lower part of the fuel reformer 1 in contact with the bottom and a lower part of the inner wall of a secondary heat insulating shaped body 39, which is described later. In the recess 20, a lower part of the combustion chamber 13 and a lower part of the reforming catalyst layer 14 are housed. The recess 20 is disposed in contact with an outer peripheral surface 43A of the partition 43 or with a gap of about 1 mm between it and the outer peripheral surface 43A. That is, the secondary heat insulating shaped body 39 covers and thermally insulates the outside of the first primary heat insulating section 17.

The second primary heat insulating section 18 is a fabric-like second primary heat insulating shaped body 38 prepared by forming a second primary heat insulating material which is different from the first primary heat insulating material for the first primary heat insulating shaped body 37. Preparing a heat insulating shaped body to be fabric-like means that the heat insulating shaped body has a fiber structure, can be freely deformed, has a length in the thickness direction which is much smaller than the lengths in the longitudinal and lateral directions, and its components are so stable that they are not changed in nature and scattered when the heat insulating shaped body is deformed. Since the second primary heat insulating shaped body 38 is fabric-like, it has flexibility and can be easily filled into a space to be filled with a narrow filling port and a large aspect ratio (ratio between the insertion length and the width of the filling port). The second primary heat insulating shaped body 38 is an inorganic staple fiber felt 38A formed in an annular shape, and disposed outside the reforming catalyst layer 14 (radially outside of the fuel reformer 1) and above the first primary heat insulating section 17. The inorganic staple fiber felt 38A is housed between the partition 43 and the partition 44 with its inside and outside in direct contact with the partition 43 and the partition 44, respectively.

The shift catalyst layer 15 has an annular shape and is disposed outside the second primary heat insulating section 18 (radially outside of the fuel reformer 1). The shift catalyst layer 15 is housed between the partition 44 and the partition 45 with its inside and outside in direct contact with the partition 44 and the partition 45, respectively. The selective oxidation catalyst layer 16 has an annular shape and is located outside the shift catalyst layer 15 (radially outside of the fuel reformer 1). The selective oxidation catalyst layer 16 is housed between the partition 46 and a vertical portion 47A of the partition 47. The secondary heat insulating shaped body 39 is disposed outside the selective oxidation catalyst layer 16. The secondary heat insulating shaped body 39 is disposed in contact with the outside of the vertical portion 47A of the partition 47. The partitions 41 to 47 are each preferably made of a stainless steel plate. The secondary heat insulating section 19 is the secondary heat insulating shaped body 39 made of a staple fiber heat insulating material as a secondary heat insulating material and having a generally circular cylindrical container structure and houses the elements of the fuel reformer 1, such as the burner 12 as described before, but the combustion material introducing section 11.

The fuel reformer 1 further includes a combustion flue gas passage 21, a raw material gas passage 22, and a reformate passage 23. The secondary heat insulating shaped body 39 having a container structure has a side wall with halls through which a combustion flue gas outlet 32, a raw material gas inlet 33, a reformate outlet 34, and a selective oxidation air inlet 35 each having a pipe-like shape extend.

The combustion flue gas passage 21 has an annular shape part formed between the combustion cylinder 13A and the partition 41 and a thin disk shape part formed in an upper part of the fuel reformer 1 and immediately below a horizontal portion 47B of the partition 47 in contact with a ceiling portion 36 of the secondary heat insulating section 19. Combustion flue gas F produced upon combustion of the raw material gas G by the burner 12 flows through the combustion flue gas passage 21 and is discharged to the outside of the fuel reformer 1 from the combustion flue gas outlet 32. The combustion flue gas F heats the reforming catalyst layer 14 while flowing through the combustion flue gas passage 21, and the reforming catalyst layer 14 is heated to a temperature in the range of 300°C to 800°C. Also, a part of the raw material gas passage 22 extends immediately below the combustion flue gas passage 21 with a disk-like shape as described later, and the combustion flue gas F preheats the raw material gas G before the raw material gas G contacts the reforming catalyst layer 14.

The raw material gas passage 22 is formed in an upper part of the fuel reformer 1 and immediately below the combustion flue gas passage 21. The raw material gas passage 22 has in its intermediate portion a passage 22A having an annular shape and a passage 22B also having an annular shape. In the passage 22A, the raw material gas G flows downward between the selective oxidation catalyst layer 16 and the shift catalyst layer 15, and flows through a heat exchanging section 25 in which the raw material gas G exchanges heat with the selective oxidation catalyst layer 16 via the partition 46, whereby the raw material gas G is preheated by the selective oxidation catalyst layer 16. In the passage 22B, the raw material gas G reverses its direction of flow, further flows upward between the selective oxidation catalyst layer 16 and the shift catalyst layer 15, and flows through a heat exchanging section 26 in which the raw material gas G exchanges heat with the shift catalyst layer 15 via the partition 45, whereby the raw material gas G is preheated by the shift catalyst layer 15.

The raw material gas G, to which water H has been added, enters the raw material gas passage 22 from the raw material gas inlet 33, and is supplied to the reforming catalyst layer 14 through the raw material gas passage 22. The reformate passage 23 includes a passage 23A formed in an annular shape between the first primary heat insulating section 17 and the reforming catalyst layer 14, a passage 23B formed above the shift catalyst layer 15, a passage 23C formed below the shift catalyst layer 15 and the selective oxidation catalyst layer 16, and a passage 23D formed above the selective oxidation catalyst layer 16. The shift catalyst layer 15 and the selective oxidation catalyst layer 16 each also form a part of the reformate passage 23.

The raw material gas G and the water H are preheated to 100°C to 500°C while flowing through the heat exchanging section 25 and the heat exchanging section 26 as the raw material gas passage 22 between the selective oxidation catalyst layer 16 and the shift catalyst layer 15. The raw material gas G is reformed into a reformate (reformed gas) M mainly composed of H₂ and CO through a reforming reaction in the reforming catalyst layer 14. The reformate M is fed from the reforming catalyst layer 14 to the shift catalyst layer 15 through the passages 23A and 23B. The CO in the reformate M is shifted to H₂ and CO₂ through a shift converter reaction in the shift catalyst layer 15, whereby the amount of CO in the reformate M decreases. The reformate M is fed from the shift catalyst layer 15 to the selective oxidation catalyst layer 16 through the passage 23C. The CO in the reformate M is oxidized through a selective oxidation reaction with air K fed from the selective oxidation air inlet 35 in the selective oxidation catalyst layer 16 and removed therefrom, whereby the reformate M is turned into fuel gas J mainly composed of H₂. To be mainly composed of H₂ means to contain a sufficient amount of hydrogen necessary to generate electric power through an electrochemical reaction with an oxidizing material in a fuel cell. In general, it means to contain 50% or more by volume, preferably approximately 80% by volume, of hydrogen. The reformate M, from which CO has been removed, flows through the passage 23D and is discharged to the outside of the fuel reformer 1 through the reformate outlet 34. The reformate M is then supplied to a solid polymer electrolyte fuel cell (not shown) as fuel gas J mainly composed of H₂ and used for fuel cell power generation.

The first primary heat insulating section 17 prevents heat from the high-temperature section, that is, (1) the combustion chamber 13, (2) the reforming catalyst layer 14, and (3) a heat exchanging section 24 in which the combustion flue gas F and the reforming catalyst layer 14 exchange heat via the partition 41, from escaping to the outside (the outside of the fuel reformer 1, the same applies hereinafter) (that is referred to as first primary heat insulation). The second primary heat insulating section 18 thermally insulates the radial outer periphery of the high-temperature section, and isolates the high-temperature section with a generally circular columnar shape from a low-temperature section with an annular shape surrounding the high-temperature section, that is, (1) the shift catalyst layer 15, (2) the selective oxidation catalyst layer 16, and (3) the heat exchanging sections 25 and 26 (that is referred to as second primary heat insulation). The low-temperature section is a second section in the fuel processor of the present invention. Here, the low-temperature section has a temperature which is relatively lower than that of the high-temperature section and higher than that of the ambient air. The secondary heat insulating section 19 is formed like it makes the circular cylindrical outer wall of the fuel reformer 1, and covers and thermally insulates the outside of the first primary heat insulating shaped body 37 in order to prevent heat from escaping from the outer surface of the fuel reformer 1 to the outside (secondary heat insulation).

In the present invention, the first primary heat insulation means to prevent heat from escaping from the high-temperature section including the combustion chamber 13 and so on to the outside as described before, and the second primary heat insulation means to insulate and thermally isolate the high-temperature section including the combustion chamber 13 and so on from the low-temperature section including the shift catalyst layer 15 and so on and surrounding the high-temperature section.

Next, the heat insulating materials for the first primary heat insulating section 17, the second primary heat insulating section 18, and the secondary heat insulating section 19 are described in greater detail.
The first primary heat insulating shaped body 37 forming the first primary heat insulating section 17 is formed by the first primary heat insulating material. The first primary heat insulating shaped body 37 is attached to and covers the inside of the fuel reformer 1 and can insulate the high-temperature section (600 to 800°C) from the outside. The first primary heat insulating shaped body 37 is formed in a three-dimensional shape and in a solid state.

The second primary heat insulating shaped body 38 forming the second primary heat insulating section 18 is formed by the second primary heat insulating material. The second primary heat insulating shaped body 38 is formed in an annular shape and in a fabric-like state, is inserted and attached between the high-temperature section and the low-temperature section, and can insulate and thermally isolate the high-temperature section from the low-temperature section. By using the first primary heat insulating shaped body 37 and the second primary heat insulating shaped body 38 the temperature of the high-temperature section can be maintained and by insulating and thermally isolating the high-temperature section from the low-temperature section, the fuel reformer 1 can process the raw material gas G efficiently and produce the fuel gas J efficiently.

In addition, the secondary heat insulating shaped body 39 is formed by the second heat insulating material. The secondary heat insulating shaped body 39, which is formed in a circular cylindrical shape, is attached to and covers the outer peripheries (side, top and bottom surfaces) of the fuel reformer 1 provided with the primary heat insulation and can decrease the surface temperature of the fuel reformer 1 to a temperature low enough not to cause burn injury even when touching the fuel reformer 1.

As the first primary heat insulating shaped body 37, (1) an inorganic foamed body 37A mainly composed of a silica-alumina-based fine powder, (2) an inorganic porous body 37B mainly composed of a silica superfine powder, or (3) an inorganic combined body 37C in which the heat insulating material for the inorganic foamed body 37A and the heat insulating material for the inorganic porous body 37B are combined like blocks can be used.
As the second primary heat insulating shaped body 38, an inorganic staple fiber felt 38A mainly composed of rock wool, ceramic wool or mixed wool obtained by mixing them can be used.

The secondary heat insulating shaped body 39 is prepared by forming rock wool as an inorganic staple fiber or glass wool as an inorganic staple fiber into a circular cylindrical shape, providing an outer skin material 40 such as ALGC (aluminum glass cross) on the outer peripheries (side, top and bottom surfaces) thereof, and cutting holes for the pipes for the combustion flue gas F, the raw material gas G, the fuel gas J, the selective oxidation air K (piping nozzles respectively connected to the raw material introduction port 31, the combustion flue gas outlet 32, the raw material gas inlet 33, the reformate outlet 34 and the selective oxidation air inlet 35).

The primary heat insulating materials (the first primary heat insulating material and the second primary heat insulating material) are made of inorganic materials which are inferior in mechanical strength but excellent in heat resistance and can perform a high temperature insulation at 1000°C or higher. Therefore, even when the high-temperature section inside has a temperature of 600 to 800 °C, the temperature of the external surfaces of the fuel reformer 1 provided with the primary heat insulation (first primary heat insulation and second primary heat insulation) can be decreased to 100°C to 200°C. The second primary heat insulating material for use in this embodiment of the present invention is superior in heat resistance but inferior in mechanical strength since the heated expansion material turns into powder and becomes brittle when heated as described later. Also, the secondary heat insulating material, which is made of a material which is slightly inferior in heat resistance to the primary heat insulating material but is inexpensive and has practical strength, can be easily attached to and cover the inside of the fuel reformer 1, and is intended for protection of the first primary heat insulating shaped body 37 as well as for heat insulation and temperature retention in a temperature range of 300°C or lower.
As described above, the production efficiency of the fuel reformer 1 can be improved by the primary heat insulation and secondary heat insulation, and it is, therefore, possible to provide the fuel reformer 1 provided with heat insulating shaped bodies having high practicality.

The first primary heat insulating shaped body 37 may be an inorganic foamed body 37A prepared by foaming a mixture of a silica-alumina-based fine powder, a heat reflecting material, a heat resistance fiber, a foam stabilizer and a curing agent to a density of approximately 500 kg/m³ or less and curing the foamed mixture to be formed.

The first primary heat insulating shaped body 37 may be an inorganic porous body 37B prepared by compression molding of a mixture of a silica-based fine powder, a heat resistance fiber and a heat reflecting material to a density of approximately 500 kg/m³ or less.

The second primary heat insulating shaped body 38 may be an inorganic staple fiber felt 38A prepared by shaping a mixture of an inorganic staple fiber and a heated expansion material into a felt-like state. The inorganic staple fiber is preferably selected from the group consisting of rock wool, ceramic wool, and a mixed fiber of rock wool and ceramic wool. An inorganic staple fiber having been subjected to shot removing treatment may be used. The inorganic staple fiber felt 38A may be prepared by shaping a mixture of an inorganic fiber selected from the group consisting of rock wool, ceramic wool, and a mixed fiber of rock wool and ceramic wool; a sintering material; a binding agent; and a heated expansion material into a felt-like state.

The secondary heat insulating shaped body 39 is preferably prepared by forming and curing an inorganic staple fiber to which a binding agent has been applied into a circular cylindrical shape and attaching a nonflammable fabric around the outer periphery of the circular cylindrical shaped body. The inorganic staple fiber is preferably a rock wool staple fiber or a glass wool staple fiber. As the binding agent, a compound selected from the group consisting of a water-soluble phenol resin, a melamine resin, and colloidal silica is preferably used.

The first primary heat insulating shaped body 37 for the first primary heat insulation, the second primary heat insulating shaped body 38 for the second primary heat insulation, and the secondary heat insulating shaped body 39 for the secondary heat insulation are described below in detail.
The heat insulating material for the first primary heat insulating section 17 is composed of the first primary heat insulating shaped body 37. As the first primary heat insulating shaped body 37, the inorganic foamed body 37A is formed by mixing and stirring a mixture of 100 parts by weight of a matrix material containing a silica-alumina-based fine powder as a primary component; a heat reflecting material; a heat resistance fiber; a fine powder weight reduction material; and an organic binding agent; 50 to 100 parts by weight of a curing agent; 5 to 15 parts by weight of a foaming agent; and 0.1 to 0.2 parts by weight of a foam stabilizer, and injecting the resulting mixture into a mold so that it can be formed into a predetermined shape as shown in the drawing.

The silica-alumina-based fine powder is composed of metakaolin, bauxite, amorphous silica, fly ash, cement and so on. As the heat reflecting material, a titanium oxide fine powder is preferably used. As the heat resistance fiber, a glass chopped fiber is preferably used since it can also serve as a dimensional stabilizer and a reinforcing material. As a particulate weight-reducing material, pearlite, glass balloon, or volcanic ash balloon is preferably used. As an organic binding agent intended to improve the strength of the inorganic foamed body 37A, a water-soluble modified acrylic resin, poval (polyvinyl alcohol) or the like is used. As the curing agent, a sodium- or potassium-based alkali metal silicate is preferably used. An aluminum powder or hydrogen peroxide aqueous solution is preferably used as the foaming agent, and casein, a silicone resin, castor oil ethylene-propylene oxide or the like is preferably used as the foam stabilizer.

After the injection, the mixture is allowed to foam and cure at a temperature of 50 to 70°C for 30 minutes to 2 hours, and is matured and dried at a temperature around 100°C for approximately 2 hours. The resulting product is then treated at a temperature of 500 to 600°C for a short period of time in order to reinforce heat resistance and dimensional stability to it, whereby the inorganic foamed body 37A can be obtained. The density and thermal conductivity of the inorganic foamed body 37A prepared as described above depend on the type of the foam stabilizer, the amount of the foaming agent, the amount of the weight-reducing material, and so on. From the viewpoint of practicality, the density is preferably in the range of 200 to 500 kg/m³, more preferably in the range of 200 to 300 kg/m³. Then, a performance of a thermal conductivity of 0.030 to 0.060 W/mK as an indicator of heat insulating properties can be obtained. Also, since the heat resistance temperature of the inorganic foamed body 37A is as high as approximately 1000°C, it is a heat insulating material for the primary heat insulation which satisfies the requirements suitable for heat insulation of the aforementioned high-temperature section (600 to 800°C).

A first primary heat insulating shaped body 37 of a second embodiment described below may be used for the first primary heat insulating section 17. The primary heat insulating shaped body 37 of the second embodiment can be an inorganic porous body 37B prepared by compression molding of a mixture containing a silica-based fine powder as a primary component, a heat reflecting material and a heat resistance fiber. As the silica-based fine powder, silica fume, which is a silica superfine powder, or the like is used. As the heat reflecting material, fine powder titanium oxide or zirconium oxide is preferably used. The heat resistance fiber also functions as a reinforcing material, and a glass chopped fiber is preferably used for it. This inorganic porous body 37B is preferably used at a low density since its materials are expensive. From the viewpoint of shape-retaining property and economic efficiency, the inorganic porous body 37B has a density preferably in the range of 200 to 500 kg/m³, more preferably in the range of 200 to 300 kg/m³. When the density is in the above range, a performance of a thermal conductivity of 0.020 to 0.030 W/mK can be obtained. Also, the heat resistance temperature of the inorganic porous body 37B is as high as approximately 1000°C. Although the inorganic porous body 37B is expensive as a material, it can provide excellent high-temperature heat insulation effect and satisfies the requirements for primary heat insulation.

The inorganic foamed body 37A or the inorganic porous body 37B is light in weight and excellent in heat resistance and heat insulating properties, and have sufficient performance for heat insulation and temperature retention of the combustion chamber 13 and so on of the fuel reformer 1 having a high temperature of 600 to 800°C. However, the first primary heat insulating shaped body 37 as the inorganic foamed body 37A or the inorganic porous body 37B has low strength and low surface hardness and is not sufficient in machinability. In order to overcome the problems, a combination with the secondary heat insulating shaped body 39 for thermally insulating and covering the first primary heat insulating shaped body 37 is preferred from the viewpoint of economic efficiency.

In the fuel reformer 1 according to this embodiment, a felt-like second primary heat insulating shaped body which can be easily inserted or attached into a narrow, circular cylindrical gap can be used for heat insulation and temperature retention as the second primary heat insulation for separating the temperature regions in the fuel reformer 1 (separating the high-temperature section and the low-temperature section).

The heat insulating material for the second primary heat insulating section 18 is composed of a felt-like second primary heat insulating shaped body 38, which is easy to insert or attach. The second primary heat insulating shaped body 38 of this embodiment can be an inorganic staple fiber felt 38A which is prepared by forming a slurry obtained by dispersing in water a mixture of 100 parts by weight of an inorganic staple fiber; 5 to 40 parts by weight of a heated expansive inorganic powder; 5 to 15 parts by weight of a sinterable inorganic powder; and 10 parts by weight or less, preferably 7 parts by weight or less in view of incombustibility, of a binding agent containing a binding aid material into a felt-like state with a sheet making machine like a circular net type or a long net type papermaking machine, and drying and curing the felt-like product.

The inorganic staple fiber for the inorganic staple fiber felt 38A is rock wool, ceramic wool, or a mixture thereof. Rock wool and ceramic wool are obtained by melting a mixture of raw material mineral substances (35 to 55 wt% of SiO₂; 10 to 20 wt% of Al₂O₃; 5 to 40 wt% of MgO; 5 to 40 wt% of CaO; 0 to 10 wt% of FeO; and 0 to 10 wt% of minor components such as Cr₂O₃, Na₂O, K₂O, TiO₂ and MnO for rock wool, 47 to 52 wt% of SiO₂; 47 to 52wt% of Al₂O₃; 0 to 10wt% in total of minor components such as CaO, MgO, TiO₂ and ZrO₂ for ceramic wool) in a cupola furnace or an electric furnace at a temperature of 1400 to 1600°C and fiberizing the molten mixture by a blowing method or a spinning method using a high-speed spinner. Since such an inorganic staple fiber contains approximately 30 wt% of unfiberized particles called "shot", it is used after removing shot therefrom.

As the heated expansive inorganic powder (heated expansion material), an unburned vermiculite powder or expansive graphite is preferably used. As the sinterable inorganic powder, a sinterable inorganic powder such as pyroborate, sepiolite, attapulgite, low-melting-point glass frit, potassium titanate whisker is preferably used. As the organic binding agent and inorganic binding agent, an acrylic resin, modified acrylic resin, vinyl acetate resin, phenol resin, colloidal silica or the like is used. As the binding aid material, polyethylene pulp, polyethylene-polypropylene composite fiber, nylon fiber or the like is preferably used.

This inorganic staple fiber felt 38A properly has a thickness of 2 to 5 mm and a basis weight of 300 to 2000 g/m² although they depend on the shape in which it is inserted or attached. Since the inorganic staple fiber felt 38A after heat-foaming of felt has a thermal conductivity in the range of 0.030 to 0.050 W/mK and a heat resistance as high as 700 to 1000°C, it can be used as the insertion-type second primary heat insulating shaped body 38 for heat insulation and temperature retention to isolate the high-temperature section from the low-temperature section in the fuel reformer 1.

The heat insulating material for the secondary heat insulating section 19 is composed of the secondary heat insulating shaped body 39. One basic form of the secondary heat insulating shaped body prepared by forming rock wool or glass wool staple fiber as an inorganic staple fiber into a circular cylindrical shape can be produced in a production facility for a heat insulating cylinder made of aforementioned rock wool or glass wool composed of 60 to 72 wt% of SiO₂; 1 to 5 wt% of Al₂O₃; 0 to 5wt% of MgO; 6 to 11 wt% of CaO; 0 to 7 wt% of B₂O₃; and 14 to 19 wt% of R₂O (Na₂O + K₂O). To prepare the secondary heat insulating shaped body 39, the before-mentioned ingredients of rock wool or glass wool are melted in a cupola furnace or electric furnace and fiberizing the molten mixture with a high-speed spinner or the like. In this process, a mat having fibers on which a water-soluble binder solution of a water-soluble phenol resin, a water-soluble melamine resin and colloidal silica, which may be mixed with a wax-based water repellent agent and/or a silane coupling agent as needed, has been sprayed and coated is wound around a circular cylindrical core pipe and thermally cured for 5 to 20 minutes at a temperature of 150 to 250°C. When the mat is cut and the core is removed, a mating-halves type heat insulating material with a circular cylindrical shape is obtained. The circular cylindrical heat insulating material has a density of 80 to 150 kg/m³, a thermal conductivity of 0.030 to 0.050 W/mK, and heat resistance suitable for a temperature range of 300 to 700°C. Also, aforementioned circular cylindrical heat insulating material is fabricated into the secondary heat insulating shaped body 39 by bonding an outer skin material 40 of ALGC (aluminum glass cross) as a nonflammable fabric or ALK (aluminum craft paper) as a nonflammable fabric thereto and cutting holes for piping therethrough. The secondary heat insulating shaped body 39 is attached to cover the fuel reformer 1 provided with the primary heat insulation in a circular cylindrical shape.

As described above, even when the internal temperature of the fuel reformer 1 according to the present invention for producing the fuel gas J, which the first primary heat insulating shaped body 37, the second primary heat insulating shaped body 38, the secondary heat insulating shaped body 39 is inserted into, is attached to and covers, is 600 to 800°C, the outer surface temperature of the fuel reformer 1 can be decreased to 30 to 50°C. That means they are excellent in heat insulating and temperature retaining properties and light in weight, and have high maintainability. Also, workability in inserting, attaching and providing the first primary heat insulating shaped body 37, the second primary heat insulating shaped body 38, and the secondary heat insulating shaped body 39 is good and both economic efficiency and practicality are satisfied. They can flexibly follow the expansion and contraction of the container due to repetition of start and stop of the operation and exhibits good heat insulating properties. Therefore, the technological problems to be solved by the present invention can be solved.

### Examples

The first primary heat insulating shaped body 37 formed by the first primary heat insulating material, the second primary heat insulation shaped body 38 formed by the second primary heat insulating material, and the secondary heat insulating shaped body 39 formed by the secondary heat insulating material for the fuel processor of the present invention are described with examples.
An example of the inorganic foamed body 37A (first primary heat insulating shaped body 37) is described (Example 1).
220 Grams of a fine powder mixture, with a particle size of 10 µm or less, of 30 wt% of metakaolin; 28 wt% of wallstonite; 20 wt% of talc; 2 wt% of muscovite; and 2 wt% of a castor oil ethylene propylene oxide-based foam stabilizer was stirred with 50 g of 40 wt% concentration potassium silicate and 30 g of 17 wt% hydrogen peroxide aqueous solution at room temperature for 3 minutes. The resulting mixture was injected into a steel mold, with a size of approximately 250 mm (length) x approximately 250 mm (width) x approximately 20 mm (thickness), subjected to a releasing treatment, and the mold was sealed by a lid. Then, the mold was put into a drier at 50°C and the mixture was allowed to foam and cure for 1 hour. Then, the mold was removed to obtain an inorganic foamed body 37A. The foamed body 37A was matured at room temperature for a whole day and night. After the maturing, the foamed body 37A was dried at 100°C for 2 hours and then subjected to a heat treatment at 600°C for 10 minutes, thereby obtaining a final product as the inorganic foamed body 37A.

The performances of the obtained inorganic foamed body 37A are summarized in Table 1.

**[Table 1]**

| Item | Unit | Performance value |
|---|---|---|
| Density | kg/m³ | 225 |
| Thermal conductivity | W/mK | 0.041 |
| Heat resistance temperature | °C | 1010 |
| Compressive strength | kg/cm² | 7.3 |

The inorganic foamed body 37A shown in Table 1 is tested by the following methods. The thermal conductivity is evaluated by measuring the thermal conductivity according to the plate method specified in JIS A 1412. The heat resistance temperature is evaluated as the temperature at which the sample is contracted in size by 2% when heated in an electric furnace at a temperature rising rate of 10°C/min. The compressive strength is evaluated as the maximum compressive strength at 5% compressive deformation.
As shown in Table 1, the inorganic foamed body 37A used in the present invention is light in weight and excellent in heat resistance and heat insulating properties, satisfies the requirements for primary heat insulation, and can be foamed into a prescribed shape. It can be therefore understood that the inorganic foamed body 37A can be used as the primary heat insulating shaped body 37.

An example of the inorganic porous body 37B is next described (Example 2).
A mixture of 100 parts by weight of superfine powder silica-aerogel with a particle size of 50 nm or less manufactured by Nippon Microtherm Co. , Ltd. ; 50 parts by weight of fine powder titanium oxide with a particle size of 1 µm or less; and 8 parts by weight of glass chopped fiber was mixed with 1 part by weight of ammonium carbonate as a forming aid agent, and the resulting mixture was subjected to compression molding at a room temperature. The molded product was matured under pressure at 125°C to obtain an inorganic porous body with a size of approximately 250 mm (length) x approximately 250 mm (width) x approximately 20 mm (width) (Note: This method corresponds to the method for producing Microtherm Block Type of Nippon Microtherm Co., Ltd.).

The performances of the obtained inorganic porous body 37B (first primary heat insulating shaped body 37) are summarized in Table 2.

**[Table 2]**

| Density in normal state | kg/m³ | 360 |
|---|---|---|
| Item | Unit | Performance value I |
| Density in dry state | kg/m³ | 350 |
| Thermal conductivity in normal state | W/mK | 0.028 |
| Thermal conductivity in dry state | W/mK | 0.023 |
| Heat Resistance temperature | °C | 1030 |

The inorganic porous body 37B shown in Table 2 is tested by the following methods. The thermal conductivity is evaluated by measuring the thermal conductivity according to the plate method specified in JIS A 1412. The heat resistance temperature is evaluated as the temperature at which the sample is contracted in size by 2% when heated in an electric furnace at a temperature rising rate of 10°C/min.
As shown in Table 2, the inorganic porous body 37B is excellent in heat resistance and heat insulating properties and satisfies the requirements for the primary heat insulation. However, it is slightly insufficient in formability and uses expensive materials. It is therefore preferred to use it in a part as a heat insulating shaped body with a simple shape.

An example of the inorganic staple fiber felt 38A-1 (with the same shape as 38A in the drawing) (second primary heat insulating shaped body 38) is next described (Example 3-1).
A mixture of 40 wt% of rock wool with a fiber length of 100 to 1000 µm obtained by dispersing in water granulated rock wool composed of 48 wt% of SiO₂, 1 wt% of CaO, 28 wt% of MgO, 19 wt% of Al₂O₃, and 4 wt% in total of other minor components, defiberizing and cutting the fibers with a pulper, and removing shot from the dispersion with a cleaner; 40 wt% of unburned vermiculite with a particle size of 0.5 to 2.0 mm; 10 wt% of defiberized and purified sepiolite; 3 wt% of a mixture of potassium titanate and pulp; 2 wt% of 3-denier polyethylene-polypropylene composite fiber with a fiber length of approximately 10 mm; and 5 wt% of a thermal self-crosslinking acrylic resin emulsion with a glass transition point of -14 °C and a solid content of 45 wt% was dispersed with a mixer to prepare an approximately 1 wt% aqueous slurry. The aqueous slurry was formed into a sheet with a rotoformer type sheet making machine. After suction drying, the sheet was dried at 150°C for 20 minutes to obtain a felt with a thickness of approximately 5 mm. Then, an inorganic staple fiber felt 38A-1 was prepared by needle-punching a 20 g/m² polyester fiber nonwoven fabric.

An inorganic staple fiber felt 38A-2 (with the same shape as 38A in the drawing) (second primary heat insulating shaped body 38) according to another example is described (Example 3-2).
An inorganic staple fiber felt 38A-2 with a thickness of approximately 5 mm was prepared in the same manner as in Example (3-1) from a mixture of 70 wt% of rock wool of Example 1; 10 wt% of expansive graphite with an average grain size of approximately 1.5 mm; 10 wt% of defiberized and purified sepiolite; 3 wt% of a mixture of potassium titanate and pulp; 2 wt% of 3-denier polyethylene-polypropylene composite fiber with a fiber length of approximately 10 mm; and 5 wt% of a thermal self-cross linking acrylic resin emulsion with a glass transition point of -14°C and a solid content of 45 wt%.

An inorganic staple fiber felt 38A-3 (with the same shape as 38A in the drawing) according to yet another example is described (Example 3-3).
An inorganic staple fiber felt 38A-3 with a thickness approximately 5 mm was prepared from the same ingredients and in the same manner as in Example (3-1) except that 40 wt% of ceramic wool with a fiber length of 100 to 1000 µm obtained by treating ceramic wool composed of 48 wt% of SiO₂; 48 wt% of Al₂O₃; and 4 wt% of other minor components in the same manner as the rock wool of the inorganic foamed body of Example 1 and removing shot therefrom was used.

The performances of the inorganic staple fiber felts 38A-1 to 38A-3 obtained in Examples (3-1) to (3-3) are summarized in Table 3.

**[Table 3]**

| | Unit | Example(3-1) | Example(3-2) | Example(3-3) |
|---|---|---|---|---|
| Thickness | mm | Approximately 5 | Approximately 5 | Approximately 5 |
| Density | kg/m³ | 240 | 220 | 230 |
| Weight (per unit area) | g/m² | 1200 | 1100 | 1150 |
| Outer appearance (visual observation) | - | Good in flexibility and surface smoothness | Good in flexibility and surface smoothness | Good in flexibility and surface smoothness |
| Fireproof | - | Flame retardance grade 1 (non-combustible) | Flame retardance grade 1 (non-combustible) | Flame retardance grade 1 (non-combustible) |
| Heat Resistance temperature | °C | 790 | 810 | 980 |
| Heated expansion factor | Times | 2 to 3 | 4 to 5 | 2 to 3 |
| Thermal conductivity (before heated expansion) | W/mK | 0.037 | 0.041 | 0.036 |
| thermal conductivity (after heated expansion) | W/mK | 0.031 | 0.035 | 0.031 |

The inorganic staple fiber felts 38A-1 to 3 shown in Table 3 are tested by the following methods. The fireproof is evaluated according to the base material test and surface test specified in JIS A 1321. The heat resistance temperature is evaluated as the temperature at which the felt is contracted in size in the longitudinal and lateral directions by 5% when heated in an electric furnace at a temperature rising rate of 10°C/min. The heated expansion factor is the expansion factor in the thickness direction of the felt which is obtained when it is heated in an electric furnace at 600 °C for 2 minutes. The thermal conductivity is evaluated by the thermal conductivity according to the plate method specified in JIS A 1412. It can be understood from Table 3 that the inorganic staple fiber felt 38A of this embodiment is a sheet having heat resistance, heat insulating properties and flexibility and can be used as an insertion type second primary heat insulating shaped body 38.

An example of an inorganic staple fiber circular cylindrical heat insulating shaped body (secondary heat insulating shaped body 39) is next described (Example 4).
Onto rock wool with an average fiber diameter of 4 µm obtained by melting the ingredients of rock wool consisting of 40 wt% of SiO₂; 13 wt% of Al₂O₃; 5 wt% of MgO; 37 wt% of CaO; and 5 wt% in total of other minor components at 1450 to 1500°C in an electric furnace and fiberizing the molten mixture with a 2-wheel type high-speed spinner using a centrifugal force was sprayed a binder liquid composed of colloidal silica and a water-soluble melamine resin through a plurality of nozzles arranged around the spinner to prepare an uncured cotton having fibers with 5 wt% of solid content coated thereon. Then, the uncured cotton was wound around a steel core pipe with an outside diameter approximately 160 mm to a thickness of approximately 20 mm and thermally cured at 200°C for 30 minutes in a curing furnace. The core was removed and the product was cut into a mating-halves type circular cylindrical heat insulating material. Then, the circular cylindrical heat insulating material was covered with a commercially available ALGC (aluminum glass cross) sheet using a chloroprene adhesive to prepare a rock wool type heat insulating shaped body as the secondary heat insulating shaped body 39.

Another example of the inorganic staple fiber circular cylindrical heat insulating shaped body (secondary heat insulating shaped body 39) is described below (Example 5).
Onto glass wool with an average fiber diameter of 6 µm obtained by melting the ingredients of glass consisting of 63 wt% of SiO₂; 3 wt% of Al₂O₃; 3 wt% of MgO; 7 wt% of CaO; 5wt% of B₂O₃; 5 wt% of K₂O; 12 wt% of Na₂O; and 2 wt% in total of other minor components at 1350 to 1400°C in an electric furnace and fiberizing the molten mixture with a high-speed spinner using a centrifugal force was sprayed a binder liquid composed of colloidal silica and water-soluble phenol through a plurality of nozzles arranged around the spinner to prepare an uncured cotton having fibers with 7 wt% solid content coated thereon. As in the case with the rock wool of Example 4, the uncured cotton was wound around a steel core pipe with an outside diameter of approximately 160 mm to a thickness of approximately 20 mm and thermally cured at 200°C for 30 minutes in a curing furnace. The core was removed and the product was cut into a mating-halves type circular cylindrical heat insulating material. Then, the circular cylindrical heat insulating material was covered with a commercially available ALGC (aluminum glass cross) sheet with a chloroprene adhesive to prepare a glass wool type heat insulating shaped body as the secondary heat insulating shaped body 39.

The performances of the heat insulating shaped bodies obtained in Examples 4 and 5 are summarized in Table 4.

**[Table 4]**

| Item | Unit | Example 4 | Example 5 |
|---|---|---|---|
| Density of thick part | kg/m³ | 95 | 64 |
| Fireproof | - | Flame retardance (non-combustible) | Flame retardance grade 1 (non-combustible) |
| Heat Resistance temperature | °C | 680 | 400 |
| Thermal conductivity | W/mK | 0.036 | 0.037 |

In Example 4 or 5, the thermal conductivity of the thick part is evaluated using a flat heat-insulating plate shaped with the same density. As shown in Table 4, the circular cylindrical heat insulating shaped bodies used in the present invention are inferior in heat resistance to the primary heat insulating material but excellent in heat insulating properties, mechanical strength, moisture proofness, and attaching and covering properties. Also, since the circular cylindrical heat insulating shaped bodies are made of inexpensive heat-insulating materials, they can be used as an economical secondary heat insulating shaped body 39. The inorganic staple fiber circular cylindrical heat insulating shaped bodies of Examples 4 and 5 as the secondary heat insulating shaped body 39 thermally insulate the outside of the first primary heat insulating shaped body 37.

The performance evaluation in an example in which the following heat insulating material is used in the fuel reformer 1 is next described (Example 6-1).
The first primary heat insulating shaped body 37 has an outside diameter of approximately 170 mm and a length of approximately 180 mm and has a recess 20 with an inside diameter of approximately 90 mm and a depth of approximately 130 mm, the second primary heat insulating shaped body 38 has an inside diameter of approximately 90 mm, a thickness of approximately 5 mm and a length of approximately 390 mm, and the secondary heat insulating shaped body 39 has an outside diameter of approximately 200 mm, a thickness of approximately 20 mm, and a length of approximately 640 mm. The first primary heat insulating shaped body 37 composed of the inorganic foamed body 37A of Example 1, the second primary heat insulating shaped body 38 composed of the inorganic staple fiber felt 38A-2 of Example 3-2, and a rock wool type circular cylindrical secondary heat insulating shaped body 39 of Example 4 were inserted into, attached to and covered a fuel reformer 1 made of stainless steel and having a combustion chamber 13 (combustion temperature: 600 to 800°C) and heat exchanging sections 24, 25 and 26 for thermal insulation and temperature retention such that the fuel reformer 1 had an outside diameter of approximately 200 mm and a length of approximately 640 mm.

Next, as another Example (Example 6-2), in the fuel reformer 1 of Example 6-1, the inorganic porous body 37B used in Example 2 was used in place of the inorganic foamed body 37A and the inorganic staple fiber felt 38A-1 used in Example 3-1 was used in place of the inorganic staple fiber felt 38A-2 used in Example 3-2 for heat insulation and temperature retention.

When a fuel gas production test was conducted in Examples 6-1 and 6-2, the production efficiency was high and the outer temperature of fuel reformer 1 thermally insulated to retain the temperature thereof was as low as 40 to 50°C even when the temperature in the combustion chamber was 600 to 800°C. That is, the heat insulation and temperature retention using the heat insulating shaped bodies 37, 38 and 39 according to an embodiment of the present invention gives excellent results.

As described in Examples (1 to 6), when heat insulating materials consisting of a combination of the inorganic foamed body 37A or the inorganic porous body 37B as the first primary heat insulating shaped body 37, the annular inorganic staple fiber felt 38A-1 or 38A-2 as the primary heat insulating shaped body 38, and the circular cylindrical secondary heat insulating shaped body 39 of these Examples are inserted into, attached to and cover the fuel reformer 1 for the purpose of heat insulation and temperature retention of the fuel reformer 1, high-temperature heat insulation and temperature retention which improve the fuel gas production efficiency can be achieved. Also, since the heat insulating shaped bodies 37, 38 and 39 of Examples (1 to 6) are light in weight and high in maintainability and are easy to be inserted into, be attached to and cover the fuel reformer 1 and since they are formed based on inexpensive materials, they have an effect of being able to provide economical heat insulation and temperature retention and being excellent in practicality. When the inorganic combined body 37C is used as the first primary heat insulating shaped body 37 or when the inorganic staple fiber felt 38A-3 is used as the second primary heat insulating shaped body 38, the similar effect can be achieved.

### Brief Description of Drawings

FIG. 1 is a cross-sectional view illustrating the configuration of a fuel reformer of the present invention.

### Description of Reference Numerals and Symbols

- 1:: fuel reformer
- 3:: opening
- 11:: combustion material introducing section
- 12:: burner
- 13:: combustion chamber
- 13A:: combustion cylinder
- 14:: reforming catalyst layer
- 15:: shift catalyst layer
- 16:: selective oxidation catalyst layer
- 17:: first primary heat insulating section
- 18:: second primary heat insulating section
- 19:: secondary heat insulating section
- 20:: recess
- 21:: combustion flue gas passage
- 22:: raw material gas passage
- 23:: reformate passage
- 24, 25, 26:: heat exchanging section
- 31:: raw material introduction port
- 32:: combustion flue gas outlet
- 33:: raw material gas inlet
- 34:: reformate outlet
- 35:: selective oxidation air inlet
- 36:: ceiling portion
- 37:: first primary heat insulating shaped body
- 37A:: inorganic foamed body
- 37B:: inorganic porous body
- 37C:: inorganic combined body
- 38:: second primary heat insulating shaped body
- 38A:: inorganic staple fiber felt
- 39:: secondary heat insulating shaped body
- 40:: outer skin material
- 41 to 47:: partition
- D:: combustion gas
- E:: combustion air
- F:: combustion flue gas
- G:: raw material gas
- H:: water
- J:: fuel gas
- M:: reformate

## Claims

1. A fuel processor for reforming a raw material gas into a fuel gas mainly composed of hydrogen, comprising:
a combustion chamber for generating heat for the reforming;
a solid first primary heat insulating material for thermally insulating the combustion chamber from an outside; and
a fabric-like secondary heat insulating material covering an outside of the first primary heat insulating material for heat insulation.

2. The fuel processor as recited in Claim 1,
wherein an inorganic foamed body prepared by foaming and curing a mixture containing a silica-alumina-based fine powder is used as the first primary heat insulating material, and
wherein a secondary heat insulating shaped body prepared from an inorganic fiber is used as the secondary heat insulating material.

3. The fuel processor as recited in Claim 1,
wherein an inorganic porous body prepared by compression molding of a mixture containing a silica-based fine powder is used as the first primary heat insulating material, and
wherein a secondary heat insulating shaped body prepared from an inorganic fiber is used as the secondary heat insulating material.

4. A fuel processor for reforming a raw material gas into a fuel gas mainly composed of hydrogen, comprising:
a combustion chamber for generating heat for the reforming;
a solid first primary heat insulating material for thermally insulating the combustion chamber from an outside; and
a fabric-like second primary heat insulating material for thermally insulating the combustion chamber from a second section in the fuel processor.

5. A fuel processor for reforming a raw material gas into a fuel gas mainly composed of hydrogen, comprising:
a combustion chamber for generating heat for the reforming; and
a solid first primary heat insulating material for thermally insulating the combustion chamber from an outside;
wherein an inorganic foamed body prepared by foaming and curing a mixture containing a silica-alumina-based fine powder is used as the first primary heat insulating material.

6. A fuel processor for processing to reform a raw material gas into a fuel gas mainly composed of hydrogen, comprising:
a combustion chamber for generating heat for the reforming; and
a fabric-like second primary heat insulating material for thermally insulating the combustion chamber from a second section in the fuel processor,
wherein an inorganic staple fiber felt prepared by forming a mixture containing an inorganic staple fiber and a heated expansion material into a felt-like state is used as the second primary heat insulating material.
